# EUROPÄISCHE PATENTSCHRIFT

(11) **EP 4 088 875 B1**
(45) Veröffentlichungstag und Bekanntmachung des Hinweises auf die Patenterteilung: **03.07.2024**
(21) Anmeldenummer: 21173688.9
(22) Anmeldetag: 12.05.2021
(51) Int. Cl.: B25F 5/00

(54) **ELEKTROWERKZEUG**
ELECTRICAL TOOL
OUTIL ÉLECTRIQUE

(43) Veröffentlichungstag der Anmeldung: 16.11.2022
(73) Patentinhaber: Andreas Stihl AG & Co. KG, 71336 Waiblingen (DE)
(72) Erfinder: VAAS, André, 73489 Jagstzell (DE); KAISER, Michael, 71336 Waiblingen (DE); BORNHÖFFT, Hendrik Alexander, 21220 Seevetal (DE); LESCHENKO, Juri, 21149 Hamburg (DE)
(74) Vertreter: Patentanwälte Ruff, Wilhelm, Beier, Dauster & Partner mbB

(56) Entgegenhaltungen:
- EP-B1- 3 291 938
- EP-B1- 3 313 621
- WO-A1-2021/030549
- US-A1- 2020 391 370

## Beschreibung

Die EP 3 313 621 B1 offenbart ein Elektrowerkzeug nach dem Oberbegriffs des Anspruchs 1.

Der Erfindung liegt die Aufgabe zugrunde, ein Elektrowerkzeug zur Verfügung zu stellen, das eine hohe Betriebssicherheit aufweist.

Das Elektrowerkzeug weist einen herkömmlichen ersten elektrischen Energiespeicher auf, beispielsweise in Form eines sogenannten Akkupacks.

Das Elektrowerkzeug weist weiter ein Betriebsdatenerfassungsgerät zum Erfassen von Betriebsdaten des Elektrowerkzeugs auf, beispielsweise einer Laufzeit des Elektrowerkzeugs und anderer betriebsbezogener Daten. Das Betriebsdatenerfassungsgerät weist einen integrierten Schaltkreis (IC) zum drahtlosen Übertragen von erfassten Betriebsdaten zu einem geeigneten Empfänger auf. Das Betriebsdatenerfassungsgerät weist weiter einen zweiten elektrischen Energiespeicher auf, wobei der integrierte Schaltkreis entweder aus dem ersten elektrischen Energiespeicher oder aus dem zweiten elektrischen Energiespeicher mit elektrischer Energie versorgbar bzw. versorgt ist.

Das Elektrowerkzeug bzw. das Betriebsdatenerfassungsgerät weist weiter eine Schaltung zum Verringern der Spannungsanstiegsgeschwindigkeit auf, die dazu ausgebildet ist, bei einem Umschalten der elektrischen Versorgung des integrierten Schaltkreises aus dem zweiten Energiespeicher auf den ersten Energiespeicher oder umgekehrt eine Spannungsanstiegsgeschwindigkeit einer Versorgungsspannung des integrierten Schaltkreises zu verringern. Die Spannungsanstiegsgeschwindigkeit kann beispielsweise um 5 %, 10 %, 50 % oder mehr verringert werden. Insbesondere ist die Schaltung zum Verringern der Spannungsanstiegsgeschwindigkeit dazu ausgebildet, die Spannungsanstiegsgeschwindigkeit bis auf einen Wert zu verringern, bei dem der integrierte Schaltkreis noch zuverlässig arbeitet.

In einer Ausführungsform weist die Schaltung zum Verringern der Spannungsanstiegsgeschwindigkeit einen Spannungsregler mit einstellbarer Ausgangsspannung auf, wobei die Ausgangsspannung des Spannungsreglers nach dem Umschalten der Versorgung des integrierten Schaltkreises aus dem zweiten Energiespeicher auf den ersten Energiespeicher die Versorgungsspannung des integrierten Schaltkreises bildet. Der Spannungsregler kann aus dem ersten Energiespeicher versorgt sein, d.h. seine Ausgangsspannung aus einer Spannung des ersten Energiespeichers erzeugen.

In einer Ausführungsform weist der Spannungsregler einen Steuerspannungs-Anschluss auf, der mit einer Steuerspannung beaufschlagbar bzw. beaufschlagt ist. Die Schaltung zum Verringern der Spannungsanstiegsgeschwindigkeit weist weiter eine Schaltung zur Erzeugung der Steuerspannung auf, insbesondere in Form eines Tiefpasses, wobei die Schaltung zur Erzeugung der Steuerspannung mit der Ausgangsspannung des Spannungsreglers beaufschlagt ist. Der Spannungsregler stellt einen Pegel seiner Ausgangsspannung derart ein, dass die Steuerspannung einen vorgegebenen Pegel, beispielsweise 1,5 V, aufweist.

In einer Ausführungsform weist das Elektrowerkzeug einen aus dem ersten elektrischen Energiespeicher gespeisten Elektromotor auf, der ein Werkzeug, beispielsweise eine Sägekette, geeignet antreibt.

In einer Ausführungsform ist der erste elektrische Energiespeicher wiederaufladbar.

In einer Ausführungsform ist der zweite elektrische Energiespeicher nicht-wiederaufladbar. Beispielsweise kann der zweite elektrische Energiespeicher eine nicht-wiederaufladbare Knopfzelle sein.

In einer Ausführungsform ist der integrierte Schaltkreis zum drahtlosen Übertragen von erfassten Betriebsdaten basierend auf einem Bluetooth Low Energy (BLE) Standard ausgebildet. Alternativ können auch andere Funktechnologien eingesetzt werden, wie beispielsweise RFID, WLAN, NB-IoT etc.

In einer Ausführungsform weist das Elektrowerkzeug eine Basiskomponente auf, wobei die Basiskomponente eine elektrische Schnittstelle zum Anschließen des ersten elektrischen Energiespeichers aufweist. Die Basiskomponente kann beispielsweise ein Gehäuse aufweisen, in dem Komponenten des Elektrowerkzeugs angeordnet sind.

In einer Ausführungsform ist das Elektrowerkzeug eine Motorsäge, oder eine Heckenschere, oder ein Laubbläser, oder ein Laubsauger, oder ein Rasenmäher, oder ein Freischneider.

Die Erfindung wird nachfolgend unter Bezugnahme auf die Zeichnungen detailliert beschrieben. Hierbei zeigt:
- Fig. 1: hoch schematisch ein Blockschaltbild eines erfindungsgemäßen Elektrowerkzeugs,
- Fig. 2: einen Schaltplan eines Spannungsreglers als Bestandteil einer Schaltung zum Verringern der Spannungsanstiegsgeschwindigkeit, wobei die Schaltung Bestandteil des in Fig. 1 gezeigten Elektrowerkzeugs ist, und
- Fig. 3: exemplarisch einen zeitlichen Verlauf einer Versorgungsspannung eines integrierten Schaltkreises des in Fig. 1 gezeigten Elektrowerkzeugs bei einem Umschalten der Versorgung des integrierten Schaltkreises aus einem zweiten Energiespeicher auf einen ersten Energiespeicher.

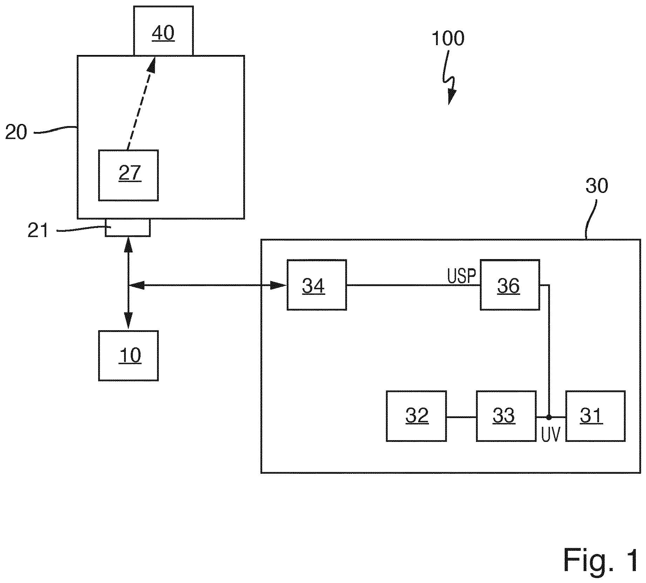

Fig. 1 zeigt hoch schematisch ein Blockschaltbild eines erfindungsgemäßen Elektrowerkzeugs 100, beispielsweise in Form einer Motorsäge, einer Heckenschere, eines Laubbläsers, eines Laubsaugers, eines Rasenmähers oder eines Freischneiders.

Das Elektrowerkzeug 100 weist eine Basiskomponente 20 auf, wobei die Basiskomponente 20 eine elektrische Schnittstelle 21 zum Anschließen eines ersten wiederaufladbaren elektrischen Energiespeichers 10 aufweist. Die Basiskomponente 20 umfasst beispielsweise ein Elektrogerätegehäuse, usw.

Der erste elektrische Energiespeicher 10 kann beispielsweise ein herkömmlicher Akkupack sein.

In der Basiskomponente 20 ist ein aus dem ersten elektrischen Energiespeicher 10 gespeister Elektromotor 27 angeordnet, der ein Werkzeug 40, beispielsweise in Form einer Schneidkette, antreibt.

Das Elektrowerkzeug 100 weist weiter ein Betriebsdatenerfassungsgerät 30 zum Erfassen von Betriebsdaten des Elektrowerkzeugs 100 auf.

Das Betriebsdatenerfassungsgerät 30 weist einen herkömmlichen Unterspannungsschutz 34 auf, der aus dem ersten elektrischen Energiespeicher 10 gespeist ist, sofern dieser vorhanden ist. Der Unterspannungsschutz 34 gibt eine Speisespannung USP aus, die abgesehen von einem Unterspannungsfall einer von dem ersten elektrischen Energiespeicher 10 ausgegebenen Spannung entspricht.

Das Betriebsdatenerfassungsgerät 30 weist weiter eine erfindungsgemäße Schaltung 36 zum Verringern der Spannungsanstiegsgeschwindigkeit auf.

Das Betriebsdatenerfassungsgerät 30 weist weiter einen integrierten Schaltkreis 31 zum drahtlosen Übertragen von erfassten Betriebsdaten auf. Der integrierte Schaltkreis 31 ist zum drahtlosen Übertragen von erfassten Betriebsdaten basierend auf einem Bluetooth Low Energy (BLE) Standard ausgebildet. Insoweit sei auch auf die einschlägige Fachliteratur verwiesen. Alternativ können auch andere Funktechnologien eingesetzt werden, wie beispielsweise RFID, WLAN, NB-IoT etc.

Das Betriebsdatenerfassungsgerät 30 weist weiter einen (zweiten) elektrischen Energiespeicher 32 in Form einer nicht-wiederaufladbaren Knopfzelle und einen Rückladeschutz 33 auf, wobei der integrierte Schaltkreis 31 grundsätzlich aus dem ersten elektrischen Energiespeicher 10, sofern gekoppelt und ausreichend geladen, oder aus dem zweiten elektrischen Energiespeicher 32 mit elektrischer Betriebsenergie versorgbar ist. Es versteht sich, dass zur Entkopplung der beiden Energiespeicher 10 und 32 nicht explizit dargestellte, geeignete Entkopplungsschaltungen vorgesehen sein können.

Die Schaltung 36 zum Verringern der Spannungsanstiegsgeschwindigkeit wandelt einen Pegel einer von dem ersten elektrischen Energiespeicher 10 ausgegebenen Spannung, d.h. einen Pegel der Speisespannung US, auf einen Pegel von beispielsweise 3,3 V um, mit dem nachfolgende Komponenten geeignet versorgt werden können.

Die Schaltung 36 zum Verringern der Spannungsanstiegsgeschwindigkeit ist dazu ausgebildet, bei einem Umschalten der Versorgung des integrierten Schaltkreises 31 aus dem zweiten Energiespeicher 32 auf den ersten Energiespeicher 10, beispielsweise aufgrund eines Koppelns bzw. Steckens des ersten Energiespeichers 10, eine Spannungsanstiegsgeschwindigkeit einer Versorgungsspannung UV des integrierten Schaltkreises 31 zu verringern. Typisch ist nämlich der vom zweiten Energiespeicher 32 ausgegebene Spannungspegel niedriger als der vom ersten Energiespeicher 10 bzw. dem Unterspannungsschutz 34 ausgegebene Spannungspegel. Ohne die Schaltung 36 zum Verringern der Spannungsanstiegsgeschwindigkeit bestünde das Risiko einer Fehlfunktion, insbesondere eines Resets, aufgrund der zu hohen Anstiegsgeschwindigkeit der Versorgungsspannung UV.

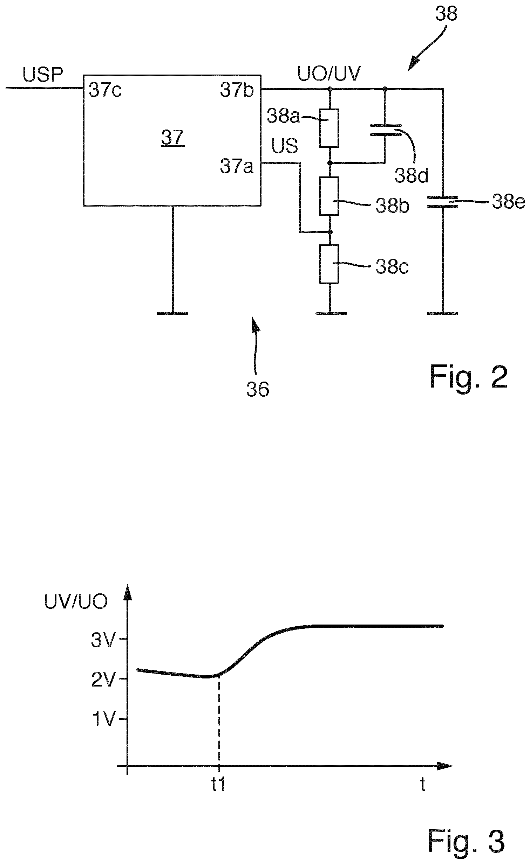

Fig. 2 zeigt einen Spannungsregler 37, der Bestandteil der in Fig. 1 gezeigten Schaltung 36 zum Verringern der Spannungsanstiegsgeschwindigkeit ist.

Der Spannungsregler 37 gibt an seinem Ausgang 37b eine einstellbare Ausgangsspannung UO aus, wobei die derart erzeugte Ausgangsspannung UO die Versorgungsspannung UV des integrierten Schaltkreises 31 bildet, wenn der erste Energiespeicher 10 angeschlossen und geladen ist. Wenn der erste Energiespeicher 10 nicht angeschlossen bzw. nicht ausreichend geladen ist, wird die Versorgungsspannung UV aus dem zweiten Energiespeicher 32 ohne Beteiligung des Spannungsreglers 37 erzeugt. Der Spannungsregler 37 wird an seinem Eingangsanschluss 37c mit der Ausgangsspannung des ersten Energiespeichers 10 bzw. der Speisespannung USP versorgt.

Der Spannungsregler 37 weist einen Steuerspannungs-Anschluss 37a auf, der mit einer Steuerspannung US beaufschlagt ist.

Die Schaltung 36 zum Verringern der Spannungsanstiegsgeschwindigkeit weist weiter eine Schaltung 38 in Form eines Tiefpasses zur Erzeugung der Steuerspannung US auf, wobei die Schaltung 38 zur Erzeugung der Steuerspannung US mit der Ausgangsspannung UO des Spannungsreglers 37 beaufschlagt ist. Die Schaltung 38 weist drei in Reihe geschaltete Widerstände 38a, 38b und 38c und einen Kondensator 38d auf. Die Widerstände 38a, 38b und 38c sind in Reihe zwischen den Ausgang 37b des Spannungsreglers 37 und Masse eingeschleift. Der Kondensator 38d ist dem Widerstand 38a parallel geschaltet. Ein Verbindungsknoten der Widerstände 38b und 38c ist mit dem Eingang 37a des Spannungsreglers elektrisch verbunden. Weiter ist ein Pufferkondensator 38e vorgesehen.

Der Spannungsregler 37 stellt einen Pegel seiner Ausgangsspannung UO derart ein, dass die Steuerspannung US einen vorgegebenen Pegel aufweist, beispielsweise 1,5 V.

Fig. 3 zeigt exemplarisch einen zeitlichen Spannungsverlauf der Versorgungsspannung UV des integrierten Schaltkreises 31 bei einem Umschalten der Versorgung des integrierten Schaltkreises 31 aus dem zweiten Energiespeicher 32 auf den ersten Energiespeicher 10.

Vor dem Umschaltzeitpunkt t1 beträgt ein Spannungspegel der Versorgungsspannung UV ca. 2,3 V. Nach dem Umschalten der Versorgung des integrierten Schaltkreises 31 auf den ersten Energiespeicher 10 steigt der Spannungspegel der Versorgungsspannung UV langsam auf ca. 3,3 V an, was dem Pegel der durch den ersten Energiespeicher 10 ausgegebenen Spannung bzw. dem Pegel der Speisespannung USP entspricht.

## Patentansprüche

1. Elektrowerkzeug (100), aufweisend:
- einen ersten elektrischen Energiespeicher (10), und
- ein Betriebsdatenerfassungsgerät (30) zum Erfassen von Betriebsdaten des Elektrowerkzeugs (100), aufweisend:
- einen integrierten Schaltkreis (31) zum drahtlosen Übertragen von erfassten Betriebsdaten, und
- einen zweiten elektrischen Energiespeicher (32), wobei der integrierte Schaltkreis (31) aus dem ersten elektrischen Energiespeicher (10) oder aus dem zweiten elektrischen Energiespeicher (32) versorgbar ist,
**dadurch gekennzeichnet, dass** das Betriebsdatenerfassungsgerät (30) weiter aufweist:
- eine Schaltung (36) zum Verringern der Spannungsanstiegsgeschwindigkeit, die dazu ausgebildet ist, bei einem Umschalten der Versorgung des integrierten Schaltkreises (31) aus dem zweiten Energiespeicher (32) auf den ersten Energiespeicher (10) eine Spannungsanstiegsgeschwindigkeit einer Versorgungsspannung (UV) des integrierten Schaltkreises (31) zu verringern.

2. Elektrowerkzeug (100) nach Anspruch 1, **dadurch gekennzeichnet, dass**
- die Schaltung (36) zum Verringern der Spannungsanstiegsgeschwindigkeit aufweist:
- einen Spannungsregler (37) mit einstellbarer Ausgangsspannung (UO), wobei die Ausgangsspannung (UO) des Spannungsreglers (37) nach dem Umschalten der Versorgung des integrierten Schaltkreises (31) aus dem zweiten Energiespeicher (32) auf den ersten Energiespeicher (10) die Versorgungsspannung (UV) des integrierten Schaltkreises (31) bildet.

3. Elektrowerkzeug (100) nach Anspruch 2, **dadurch gekennzeichnet, dass**
- der Spannungsregler (37) einen Steuerspannungs-Anschluss (37a) aufweist, der mit einer Steuerspannung (US) beaufschlagbar ist,
- wobei die Schaltung (36) zum Verringern der Spannungsanstiegsgeschwindigkeit aufweist:
- eine Schaltung (38) zur Erzeugung der Steuerspannung (US), wobei die Schaltung (38) zur Erzeugung der Steuerspannung (US) mit der Ausgangsspannung (UO) des Spannungsreglers (37) beaufschlagt ist,
- wobei der Spannungsregler (37) einen Pegel seiner Ausgangsspannung (UO) derart einstellt, dass die Steuerspannung (US) einen vorgegebenen Pegel aufweist.

4. Elektrowerkzeug (100) nach einem der vorhergehenden Ansprüche, **dadurch gekennzeichnet, dass**
- das Elektrowerkzeug (100) aufweist:
- einen aus dem ersten elektrischen Energiespeicher (10) gespeisten Elektromotor (27).

5. Elektrowerkzeug (100) nach einem der vorhergehenden Ansprüche, **dadurch gekennzeichnet, dass**
- der erste elektrische Energiespeicher (10) wiederaufladbar ist.

6. Elektrowerkzeug (100) nach einem der vorhergehenden Ansprüche, **dadurch gekennzeichnet, dass**
- der zweite elektrische Energiespeicher (32) ein nicht-wiederaufladbarer elektrischer Energiespeicher, insbesondere eine Knopfzelle, ist.

7. Elektrowerkzeug (100) nach einem der vorhergehenden Ansprüche, **dadurch gekennzeichnet, dass**
- der integrierte Schaltkreis (31) zum drahtlosen Übertragen von erfassten Betriebsdaten basierend auf einem Bluetooth Low Energy (BLE) Standard ausgebildet ist.

8. Elektrowerkzeug (100) nach einem der vorhergehenden Ansprüche, **dadurch gekennzeichnet, dass**
- das Elektrowerkzeug (100) eine Basiskomponente (20) aufweist, wobei die Basiskomponente (20) eine elektrische Schnittstelle (21) zum Anschließen des ersten elektrischen Energiespeichers (10) aufweist.

9. Elektrowerkzeug (100) nach einem der vorhergehenden Ansprüche, **dadurch gekennzeichnet, dass**
- das Elektrowerkzeug (100) eine Motorsäge, oder eine Heckenschere, oder ein Laubbläser, oder ein Laubsauger, oder ein Rasenmäher, oder ein Freischneider ist.

## Claims

1. Power tool (100), comprising:
- a first electrical energy store (10), and
- an operating data detection device (30) for detecting operating data of the power tool (100), comprising:
- an integrated circuit (31) for wirelessly transmitting detected operating data, and
- a second electrical energy store (32), wherein the integrated circuit (31) can be supplied from the first electrical energy store (10) or from the second electrical energy store (32),
**characterized in that** the operating data detection device (30) further comprises:
- a circuit (36) for reducing the rate of voltage rise, which circuit is designed to reduce a rate of voltage rise of a supply voltage (UV) of the integrated circuit (31) when the supply of the integrated circuit (31) from the second energy store (32) is switched over to the first energy store (10).

2. Power tool (100) according to Claim 1, **characterized in that**
- the circuit (36) for reducing the rate of voltage rise comprises:
- a voltage controller (37) having an adjustable output voltage (UO), wherein the output voltage (UO) of the voltage controller (37) forms the supply voltage (UV) of the integrated circuit (31) after the supply of the integrated circuit (31) from the second energy store (32) has switched over to the first energy store (10).

3. Power tool (100) according to Claim 2, **characterized in that**
- the voltage controller (37) comprises a control voltage connection (37a), to which a control voltage (US) can be applied,
- wherein the circuit (36) for reducing the rate of voltage rise comprises:
- a circuit (38) for generating the control voltage (US), wherein the output voltage (UO) of the voltage controller (37) is applied to the circuit (38) for generating the control voltage (US),
- wherein the voltage controller (37) adjusts a level of the output voltage (UO) thereof in such a way that the control voltage (US) has a predetermined level.

4. Power tool (100) according to one of the preceding claims, **characterized in that**
- the power tool (100) comprises:
- an electric motor (27) fed from the first electrical energy store (10).

5. Power tool (100) according to one of the preceding claims, **characterized in that**
- the first electrical energy store (10) is rechargeable.

6. Power tool (100) according to one of the preceding claims, **characterized in that**
- the second electrical energy store (32) is a non-rechargeable electrical energy store, in particular a button cell.

7. Power tool (100) according to one of the preceding claims, **characterized in that**
- the integrated circuit (31) is designed for wirelessly transmitting detected operating data based on a Bluetooth Low Energy (BLE) standard.

8. Power tool (100) according to one of the preceding claims, **characterized in that**
- the power tool (100) comprises a base component (20), wherein the base component (20) comprises an electrical interface (21) for connecting the first electrical energy store (10).

9. Power tool (100) according to one of the preceding claims, **characterized in that**
- the power tool (100) is a chainsaw, or a hedge trimmer, or a leaf blower, or a leaf vacuum, or a lawnmower, or a brush cutter.

## Revendications

1. Outil électrique (100), comportant :
- un premier accumulateur d'énergie électrique (10), et
- un appareil d'acquisition de données de fonctionnement (30) destiné à acquérir des données de fonctionnement de l'outil électrique (100), comportant :
- un circuit intégré (31) destiné à transmettre sans fil des données de fonctionnement acquises, et
- un second accumulateur d'énergie électrique (32), dans lequel le circuit intégré (31) peut être alimenté par le premier accumulateur d'énergie électrique (10) ou par le second accumulateur d'énergie électrique (32), **caractérisé en ce que** l'appareil d'acquisition de données de fonctionnement (30) comporte en outre :
- un circuit (36) de réduction de vitesse de montée en tension qui est conçu pour réduire une vitesse de montée en tension d'une tension d'alimentation (UV) du circuit intégré (31) lors d'un basculement de l'alimentation du circuit intégré (31) du second accumulateur d'énergie (32) au premier accumulateur d'énergie (10).

2. Outil électrique (100) selon la revendication 1, **caractérisé en ce que**
- le circuit (36) de réduction de vitesse de montée en tension comporte :
- un régulateur de tension (37) à tension de sortie (UO) réglable, dans lequel la tension de sortie (UO) du régulateur de tension (37) constitue la tension d'alimentation (UV) du circuit intégré (31) après basculement de l'alimentation du circuit intégré (31) du second accumulateur d'énergie (32) au premier accumulateur d'énergie (10).

3. Outil électrique (100) selon la revendication 2, **caractérisé en ce que**
- le régulateur de tension (37) comporte une borne de tension de commande (37a) qui peut être alimentée avec une tension de commande (US),
- dans lequel le circuit (36) destiné à réduire la vitesse de montée en tension comporte :
- un circuit (38) destiné à générer la tension de commande (US), dans lequel le circuit (38) destiné à générer la tension de commande (US) est alimenté avec la tension de sortie (UO) du régulateur de tension (37),
- dans lequel le régulateur de tension (37) règle un niveau de sa tension de sortie (UO) de telle sorte que la tension de commande (US) présente un niveau prédéfini.

4. Outil électrique (100) selon l'une des revendications précédentes, **caractérisé en ce que**
- l'outil électrique (100) comporte :
- un moteur électrique (27) alimenté par le premier accumulateur d'énergie électrique (10).

5. Outil électrique (100) selon l'une des revendications précédentes, **caractérisé en ce que**
- le premier accumulateur d'énergie électrique (10) est rechargeable.

6. Outil électrique (100) selon l'une des revendications précédentes, **caractérisé en ce que**
- le second accumulateur d'énergie électrique (32) est un accumulateur d'énergie électrique non rechargeable, notamment une pile bouton.

7. Outil électrique (100) selon l'une des revendications précédentes, **caractérisé en ce que**
- le circuit intégré (31) est conçu pour transmettre sans fil des données de fonctionnement acquises sur la base d'une norme Bluetooth Low Energy (BLE).

8. Outil électrique (100) selon l'une des revendications précédentes, **caractérisé en ce que**
- l'outil électrique (100) comporte un composant de base (20), dans lequel le composant de base (20) comporte une interface électrique (21) destinée au raccordement du premier accumulateur d'énergie électrique (10).

9. Outil électrique (100) selon l'une des revendications précédentes, **caractérisé en ce que**
- l'outil électrique (100) est une tronçonneuse, ou un taille-haie, ou un souffleur de feuilles, ou un aspirateur de feuilles, ou une tondeuse à gazon, ou une débroussailleuse.
